# EUROPEAN PATENT APPLICATION

(11) **EP 1 967 468 A1**
(43) Date of publication of application: **10.09.2008**
(21) Application number: 07004572.9
(22) Date of filing: 06.03.2007
(51) Int. Cl.: B65G 1/137, B65G 57/14

(54) **A cart having a conveyor for containers**

(71) Applicant: CPH Design A/S, 2300 Copenhagen S (DK)
(72) Inventor: Thierry-Carstensen, Jacob, 2100 Copenhagen (DK); Rossel, Ole Bjorn, 2920 Charlottenlund (DK); Thogersen, Lars, 2300 Copenhagen (DK)
(74) Representative: Inspicos A/S

(57) **Abstract**

A wheeled cart (100) for supporting a plurality of containers (122) during picking of products from a storehouse comprises a closed-loop conveyor (104) for moving the containers (122). Container supporting elements are provided for maintaining the containers in an essentially horizontal orientation, A mechanism (130) is provided for stacking and/or de-stacking the plurality of containers, and for simultaneously loading and/or discharging the containers to and from the conveyor (104).

## Description

### Technical field

The present invention relates to a cart for use during picking of products from a store and during filling of the products into a plurality of containers. The cart includes a conveyor for product containers and is particularly useful in a storehouse, from which products are shipped to a number of recipients, e.g. to a number of stores. The cart is also useful at factories, shops and a variety of other locations, in which items are regularly picked from a store and shipped or conveyed to recipients. The cart is applicable to e.g. textiles, books, DVDs, CDs, consumer electronics, machinery components, tools, foods and beverages, luggage, agricultural products, etc.

### Background of the Invention

A number of storehouse management and logistics systems have been proposed in the past, and various trucks have been developed for conveying picked items in storehouses. EP-A-849 193 discloses a wheel-mounted device suitable for supporting product containers during the process of picking. The device is connectable to a store truck and comprises a frame on which there is provided a stepwise rotating turn cage carrying a plurality of support plates on which containers for products are located. The turn cage is arranged maintain the product containers in a horizontal position during rotation thereof. Initially, an operator of the device of EP-A-849 193 places a plurality of containers on the device, connects the device to a shuttle truck, and then fills the containers. Once filling is completed, the containers are dischared onto an external evacuation conveyor.

Operation of the device of EP-A-849 193 is associated with several manual steps: if the containers arrive to the storehouse in a stacked configuration, they have to be manually destacked. Then, the containers have to be placed manually on the device. Following filling of the containers and discharge thereof from the device, they have to be stacked manually. These manual operations are time-consuming and they compromise ergonomics. Moreover, the device suffers from the disadvantage that it requires the presence of an external discharge conveyor.

### Description of the invention

It is hence an object of preferred embodiments of the invention to provide a cart for use during picking of products from a store and during filling of the products into containers, which requires less manual labour work, and which is operable without a separate external discharge conveyor.

In a first aspect, the invention provides a wheeled cart for supporting a plurality of product containers, comprising:
- a closed-loop conveyor for moving the containers along a closed-loop conveyor path in an upright plane; and
- container supporting elements for maintaining the containers in an essentially horizontal orientation at least over a portion of the closed-loop conveyor path;
characterised by a mechanism for stacking and/or de-stacking the plurality of containers, and for
(i) taking each one of the containers out of the conveyor substantially simultaneously with stacking of the container; and/or for
(ii) bringing each one of the containers into the conveyor substantially simultaneously with de-stacking of the container.

In a second aspect, the invention provides a method of picking products from a store and filling the products into a plurality of containers, comprising providing a wheeled cart according to the first aspect of the invention, and at least one of the steps of:
(i) taking at least one of the containers out of the conveyor of the cart substantially simultaneously with stacking of the container; and/or
(ii) bringing at least one of the containers into the conveyor substantially simultaneously with de-stacking of the container;
the method further comprising the steps of picking the products from the store, and filling the products into the at least one container, while the container is in the conveying path of the conveyor.

In a third aspect, the invention provides system for filling products into a plurality of containers, comprising a cart according to the first aspect of the invention, and the plurality of containers.

It will be appreciated that the capability of the cart to stack and/or de-stack containers and simultaneously load or unload the containers with respect to the conveyor alleviates humans from these tasks. Hence, consumption of non-productive time may be reduced, and ergonomics may be improved. In preferred embodiments of the invention, the mechanism for stacking and/or de-stacking is adapted to perform both operations, i.e. to stack and to de-stack the containers.

Stacking and/or de-stacking of the containers and simultaneous loading and/or unloading of the containers from the conveyor may be achieved by mechanical or magnetic means or by a combination thereof. The mechanical or magnetic means may be passively controlled, i.e. controlled purely by the movement of the conveyor and the position of the containers relative to the conveyor, or they may be actively controlled, e.g. by an electronic control system of the cart, including appropriate sensors and activation elements.

Though it is particularly beneficial with respect to the reduction of manual work that the cart is configured for both stacking and de-stacking, embodiments are envisaged, in which the cart is adapted to perform only one of the two operations, i.e. stacking or de-stacking.

Thanks to the provision of the closed-loop conveyor, containers may be infinitely rotated in the conveyor, whereby the operator's convenience is enhanced.

In a presently preferred embodiment, the conveyor is reversible, so as to allow conveying of the containers in two opposite directions. For example, the mechanism may be arranged to de-stack containers when the conveyor moves in a first conveying direction, and to stack containers when the conveyor moves in a second, reversed conveying direction. Either one of the conveying directions may also be used for advancing the containers during picking. The cart may include a control device allowing an operator to control the conveyor, i.e. to control stacking, de-stacking and/or advancing of the containers.

The conveyor may e.g. be chain-driven, having an electric motor as its power source. A rechargeable battery pack may be provided on the cart. The battery pack may e.g. be releasably mounted on the cart. Two battery packs may be provided with the cart, so that one battery pack may be charged, while the other one is in use.

To securely support the containers, the conveyor may comprise a pair of essentially parallel conveyor sections arranged with a mutual distance. Thereby, left and right sides of the containers may be supported by respective conveyor sections. The transverse distance between the conveyor sections may be constant, or it may be variable to adapt the cart to containers of various sizes.

The containers may e.g. include identical, stackable boxes with slightly inclined side walls. The containers may e.g. include lids, which may close top openings of the containers, so as to protect the packed products and to facilitate stacking of the containers once filled.

The cart may be non-propelled or propelled. In the propelled alternative, the driving force for the cart may be provided by an electrically powered hydraulic motor, by an electric motor or by a combustion engine. In the non-propelled alternative, the cart simply comprises a plurality of wheels, which may preferably be rotatable not only around their essentially horizontal axis of rotation, but also around an upright axis to facilitate manual manoeuvring of the cart. The cart may conveniently comprise two or four such swivel wheels.

The de-stacking/stacking mechanism may be comprised in the closed-loop conveyor. For example, the conveyor may comprise a plurality of container-engaging devices, which automatically engage stacked containers arranged in the conveying path of the conveyor, and/or which automatically release a container, whose downward motion is blocked, while the conveyor is simultaneously advanced. For de-stacking of containers, the container-engaging devices may be arranged so as to engage an uppermost container in a stack of containers and to thereby remove the uppermost container from the stack and bring it into the conveyor. The container-engaging devices may be inwardly biased, for example by springs, i.e. biased towards respective side portions of containers arranged between the opposing conveyor sections. To securely support the containers, pairs of opposing container-engaging devices may be provided on the respective left and right conveyor sections.

The container-engaging devices may e.g. be pivotally mounted. Above the pivot of each container-engaging device there may be provided a lower container-engaging element, and, at a higher position, an abutting element. Thereby, as the abutting element slides along the side walls of the stacked containers, the container-engaging element is prevented from entering into engagement with an edge portion of any container. However, as the abutting element travels past an uppermost container in a stack of containers, it is pivotally biased in an inward direction, thereby bringing the lower container-engaging element into a path, in which it engages an edge portion of the uppermost container.

It will be appreciated that for stacking, the container-engaging element may release the edge portion of a container, whose downward motion is prevented, e.g. as its bottom surface engages a top surface of another container. Alternatively, the containers may be released onto an external conveyor, e.g. a conveyor belt or a roller conveyor, by means of which the containers are separately conveyed for further processing thereof.

Likewise, containers arriving on an external conveyor may be loaded into the conveyor of the cart of the present invention.

In order to facilitate filling of the containers and to maximize operator convenience, a plurality of containers may preferably be infinitely circulated in the conveyor. Once the operator wishes to discharge one or more containers from the conveyor, a support for a stack, of containers may be placed in the conveying path. For example, a ground-rolled support. frame may be placed between the left and right conveyor sections, so that when a container is downwardly advanced towards the support frame, the bottom surface of the container engages the support frame. Further movement of the container is prevented by the support frame, and hence the container-engaging device release the container. The next container in the conveyor is released when its bottom surface engages the top surface of the previously released container. As this is repeated, a stack of filled containers is being built.

In order to appropriately align the stack of containers, the cart may comprise at least one aligning device for aligning a stack of containers with respect to the conveyor. The aligning device may e.g. engage one or more of the containers in the stack, and/or it may engage the ground-rolled support frame. The aligning device may include elements for centrally aligning the stack of containers with respect to the left and right conveyor sections, and it may also or alternatively include elements for longitudinal alignment.

The conveyor may comprise suitable elements for keeping the containers in a horizontal state over at least a portion of the conveying path, and preferably over the entire conveying path. For example, guiding tracks for keeping the container-engaging elements in a horizontal configuration may be provided.

The cart may comprise a stepladder for a human operator, allowing the operator to pick products at different heights.

The closed-loop conveyor preferably has a lower and an upper portion, along which the containers can be conveyed in a substantially horizontal direction, and a left and right portion, along which the containers can be conveyed in a substantially vertical direction. Hence, vertical sections of the conveyor may serve to lift the containers to any height according to the operator's needs. One of the left and right portions may comprise at least two laterally offset sections for maximising operator convenience.

### Description of the drawings

Embodiments of the invention will now be described with reference to the drawings, in which:
Figs. 1-9 illustrate operation of an embodiment of a cart according to the present invention;
Figs. 10-16 illustrate an embodiment of a mechanism for stacking and de-stacking containers;
Figs. 17-21 illustrate an embodiment of an alignment device for aligning a stack of containers with respect to the cart of Figs. 1-9.

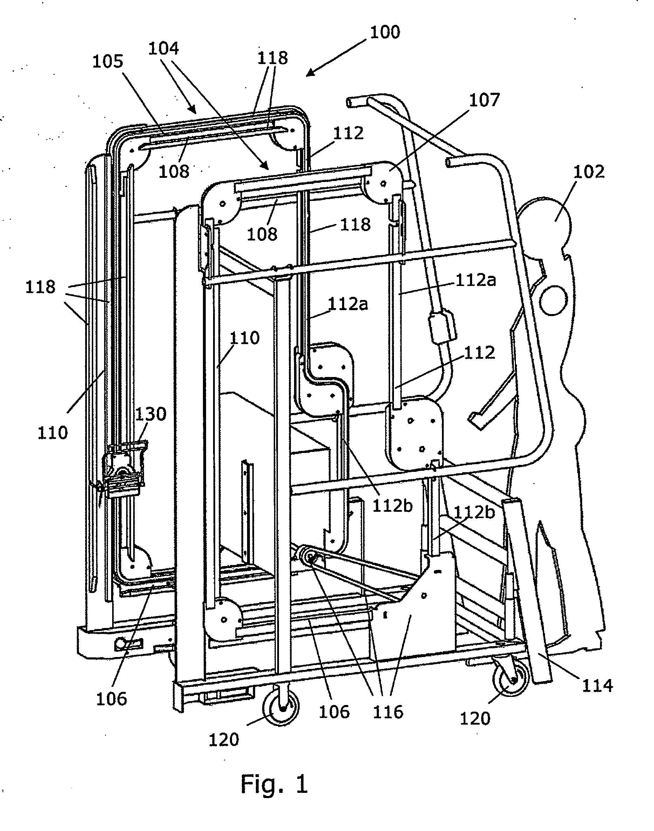

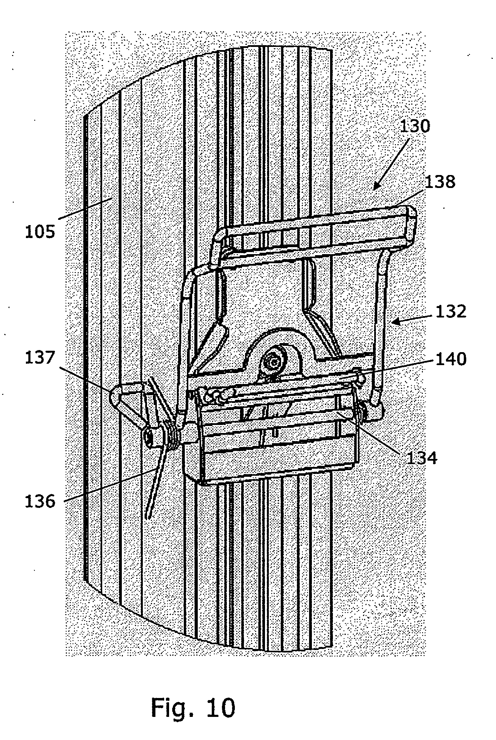

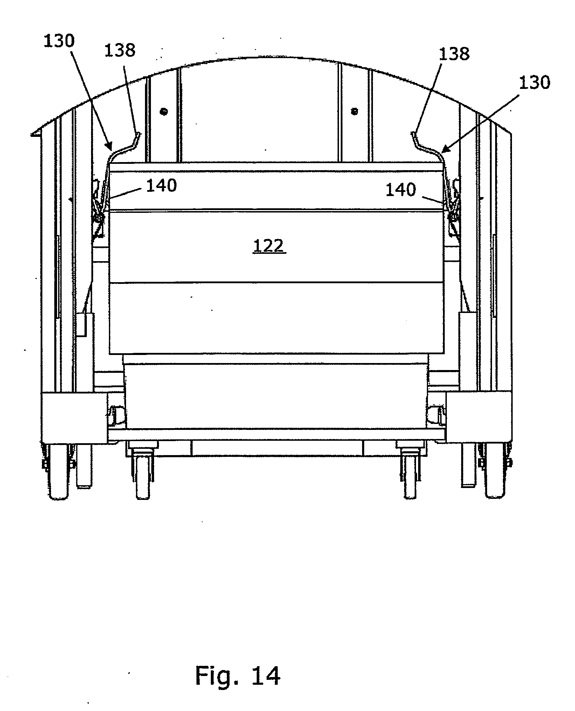

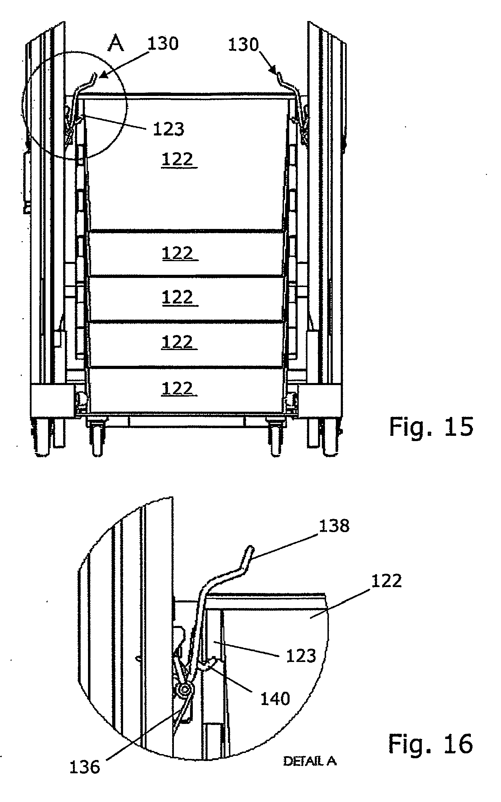

Figs. 1-9 generally illustrate an embodiment of a cart 100 according to the present invention. As shown in Fig. 1, the cart 100 may be operable by a human operator 102. The cart comprises a closed-loop conveyor 104 for conveying containers in a closed-loop conveying path during picking of products as described further below. The conveyor 104 includes left and right conveyor sections 105 and 107, each having upper and lower horizontal portions 106 and 108, as well as left and right portions 110 and 112, one of which has two laterally offset sections 112a and 112b. At that side of the conveyor sections, which includes the offset sections 112a and 112b, there is provided a stepladder 114 for the operator 102. The cart comprises a drive for the conveyor 104, generally denoted 116. Alignment tracks 118 are provided for maintaining the containers conveyed by the conveyor 104 in a horizontal position as described further below. The cart comprises four non-propelled wheels 120. It should, however, be understood that the wheels may be propelled. Pairs of container-engaging devices 130 are provided on the respective left and right conveyor sections 105 and 107, cf. the description of Figs. 10-16.

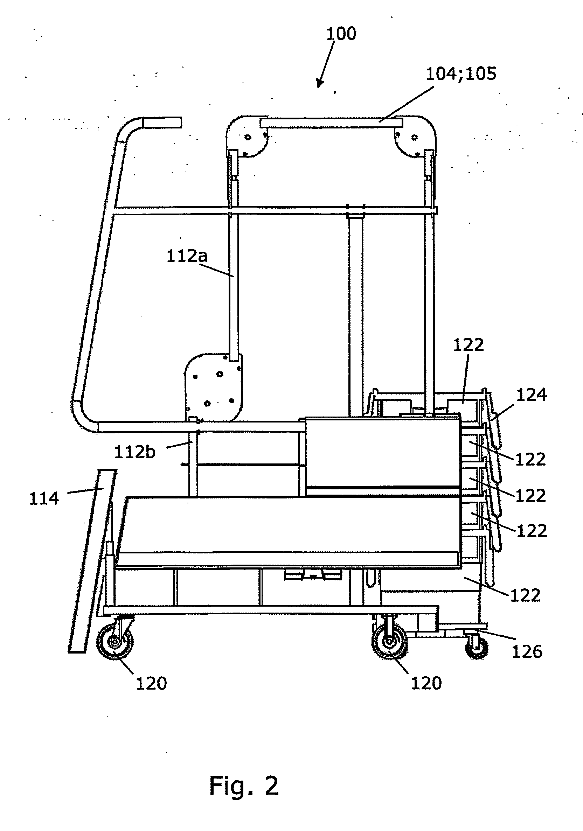

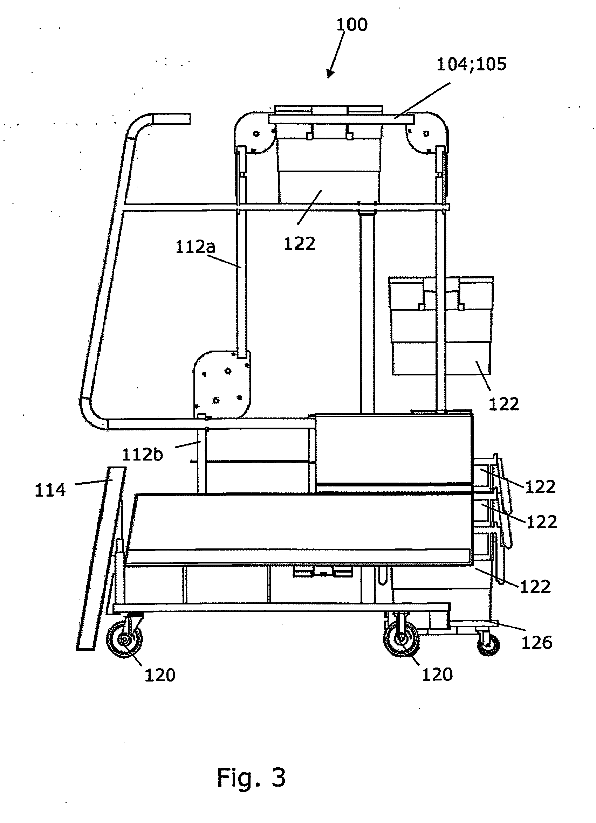

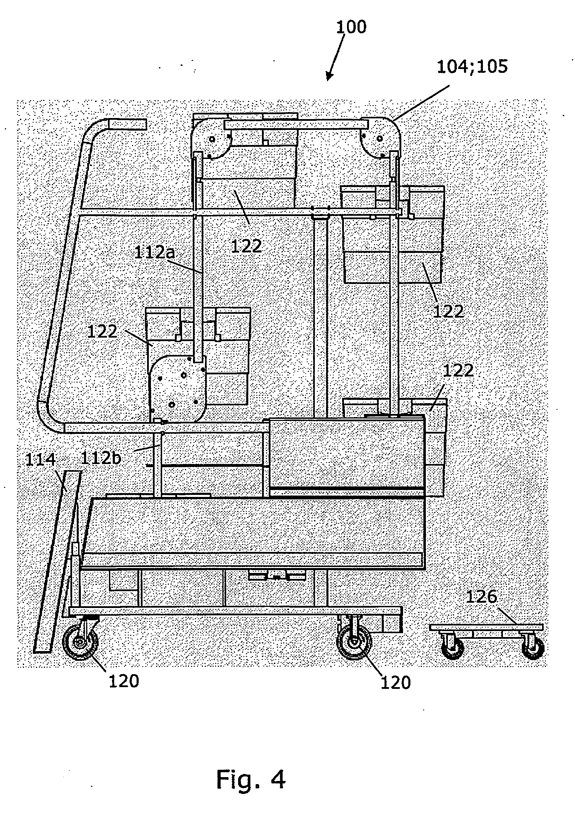

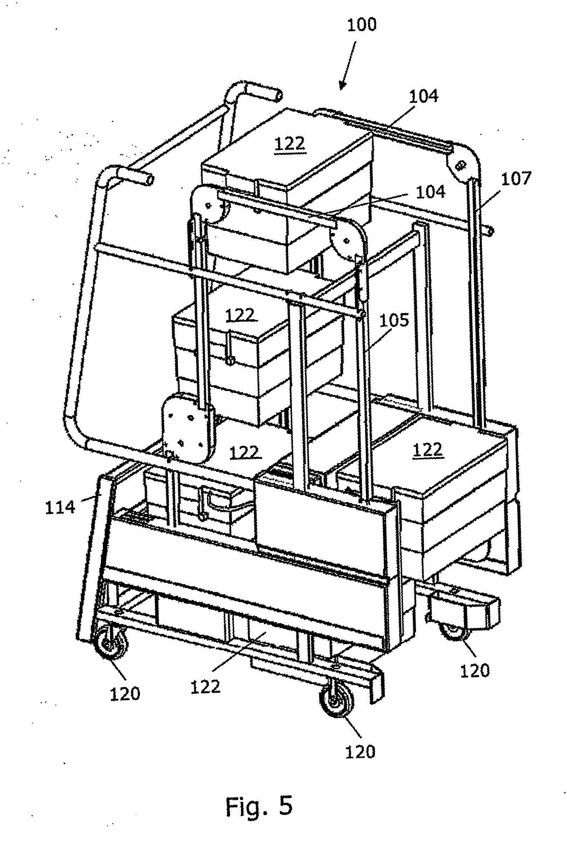

Fig. 2 shows the cart 100 in a side view, in which containers 122 to be de-stacked and loaded onto the conveyor 104 are arranged between the left and right conveyor sections 105 (only conveyor section 105 is visible in Fig. 2). The containers 122 are stacked on a ground-rolled container-supporting frame 126, such as a trolley. Each container includes lids 124 for closing the container once filled. In the illustration of Fig. 3, the conveyor has been rotated counter clockwise, and two of the containers 122 have been lifted off the stack and loaded onto the conveyor 104 (the mechanism for de-stacking is described in further detail below). As the conveyor 104 continues to drive counter clockwise, each one of the containers 122 of the stack of Fig. 2 is lifted off and loaded onto the conveyor. Figs. 4 and 5 show the state, in which all containers 122 have been de-stacked, and the ground-rolled supporting frame has been withdrawn.

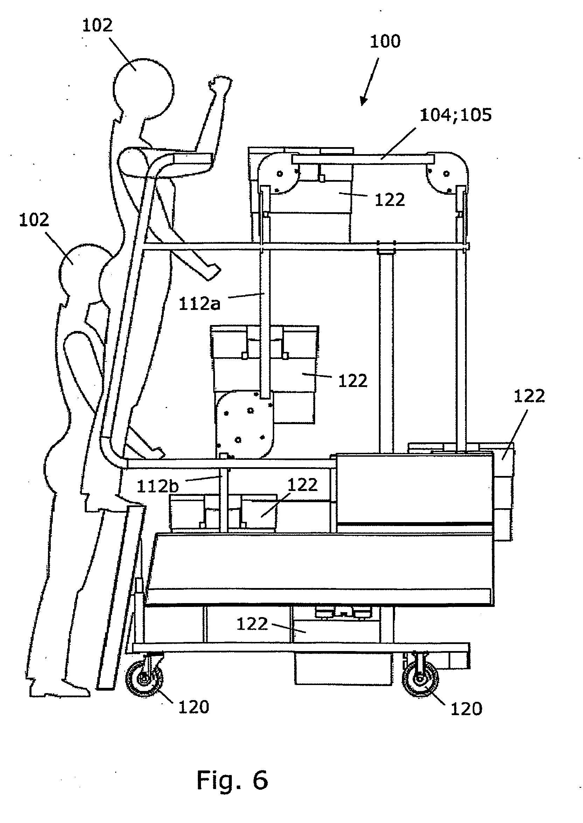

Fig. 6 illustrates the cart 100 in the state, in which the operator 102 picks products and fills them into the containers 122. The operator is shown in two alternative positions, i.e. on the ground and at an uppermost step of the stepladder 114. Thanks to the stepladder, the operator may fill products into any one of the three containers 122 located at conveyor sections 112a and 112b. The stepladder 114 also allows the operator to pick products from different heights, e.g. from different shelves of the store. The operator may advance the containers in the clockwise or counter clockwise direction according to his preference, so as to conveniently fill products into each of the containers.

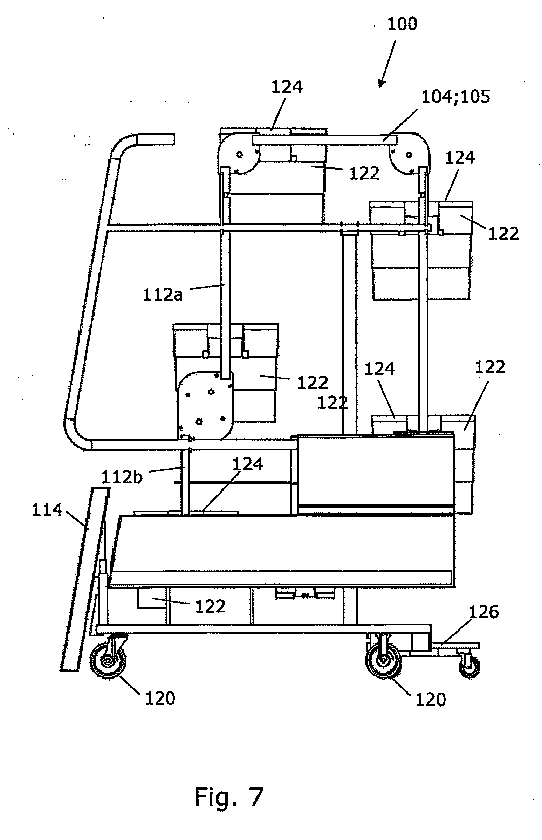

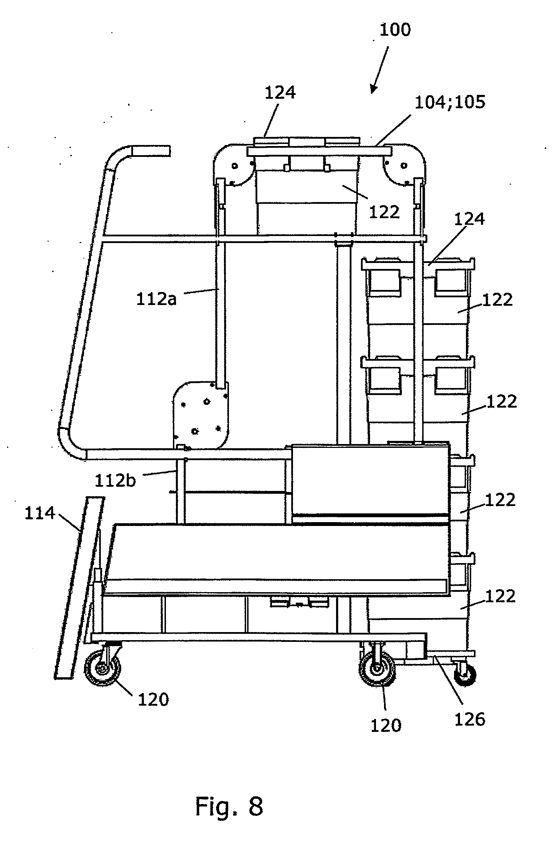

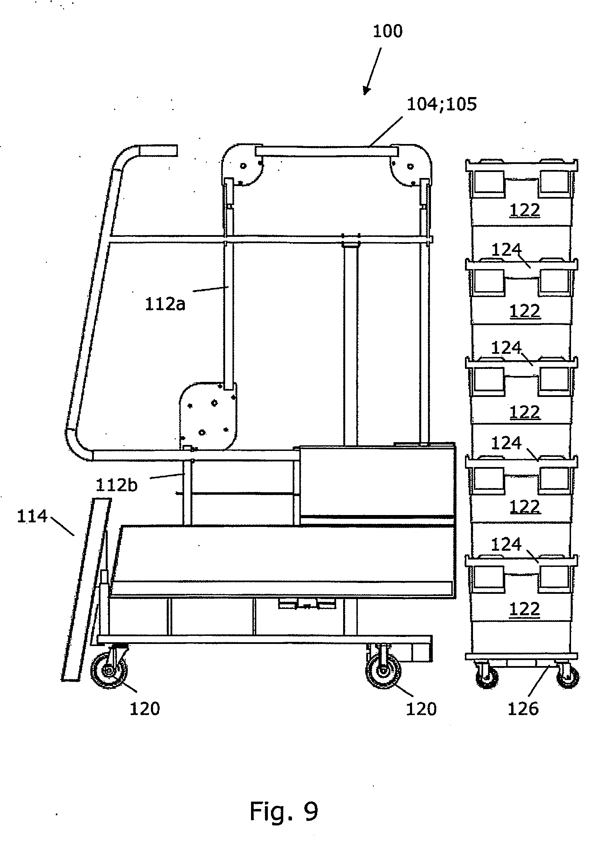

Stacking of the containers 122 and simultaneous unloading thereof from the conveyor 104 is illustrated in Figs. 7-9. Initially, as shown in Fig. 7, the ground-rolled support frame 126 is placed between the left and right conveyor sections 105, 107, of which only conveyor section 105 is visible in Figs. 7-9. The operator has closed the lids 124 of each of the containers 122, and the conveyor is now advanced in the clockwise direction. That one of the containers 122, which is nearest the support frame 126, is the first one to be discharged from the conveyer, as its bottom surface makes contact with and rests on the support frame 126. As the conveyor 104 is advanced further in the clockwise direction, the bottom surface of a next container 122 makes contact with the upper surface of the lid 124 of the previous container. Simultaneously, the container is released. In Fig. 8, four containers 122 have been stacked in this manner, and the fifth and last container 122 is stacked and simultaneously released in the same way. Finally, as shown in Fig. 9, the ground-rolled support frame 126 may be withdrawn from the cart 100.

Figs. 10-16 illustrate the container-engaging device 130 in more detail. It comprises a frame 132, which is pivotally mounted around a pivot axis 134. A spring 136 biases the frame 132 in an inward direction, i.e. away from the conveyor section 105. It will be understood that a mirrored container-engaging device is provided on the other conveyor section 107. The frame forms an abutting element 138 in the form of a longitudinally extending rod, and a container-engaging element 140. The abutting element 138 is at a higher position than the container-engaging element 140. An extension 137 of the container-engaging device 130 is integrally connected to the abutting element 138 and slides against a track portion of one of the left and right conveyor sections 105, 107. In areas of the conveyor Including no such track portion, the abutting element 138 as well as the container-engaging element 140 are outwardly biased, and hence containers cannot be picked up by the conveyor in such areas. However, containers already picked up rest on container-engaging element 140, and gravity overcomes the outward biasing force acting on the element 140.

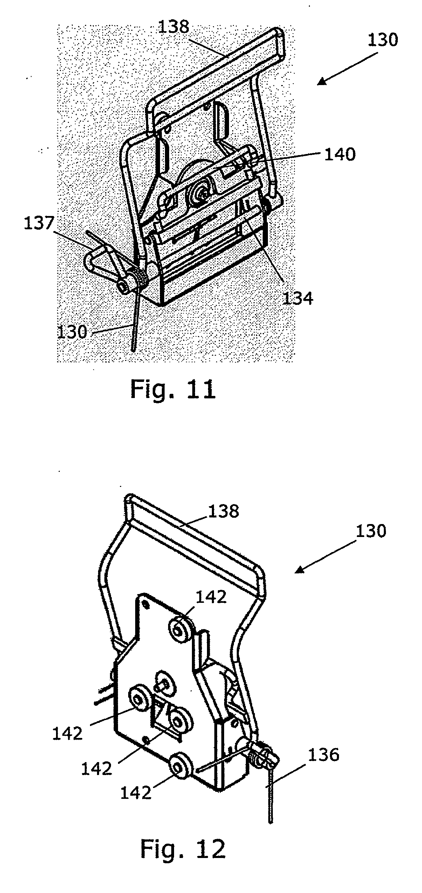

Figs. 11 and 12 show the container-engaging element 130 separate from the conveyor. Rollers 142 are provided to stabilise the container-engaging element 130 with respect to the conveyor 104 and to maintain the containers 122 and the container-engaging elements 130 in a substantially horizontal orientation.

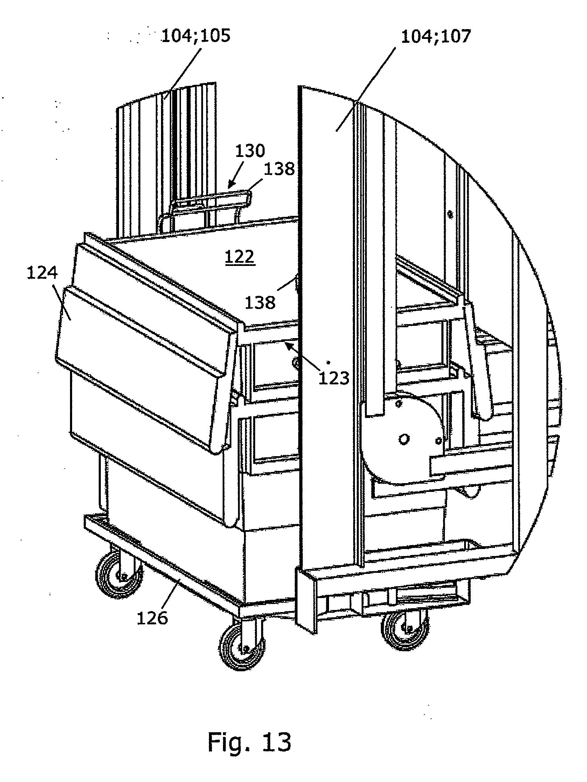

Figs. 13-16 illustrate the way of operation of the container-engaging element 130. As the conveyor 104 advances in the upward direction, the abutting element 138 of respective left and right container-engaging elements 130 slide along the outer surface of the containers 122. Figs. 13-16 show the state, in which the abutting element 138 has;moved past an upper edge of the uppermost one of the containers 122. In this state, the abutting element has pivoted inwardly, as it is biased by the spring 136. At the same time, the container-engaging element 140 has engaged an edge 123 of the container 122, so that when the left and right container-engaging elements 130 move further in the upward direction, the uppermost container 122 is lifted off the stack and simultaneously loaded onto the conveyor 104.

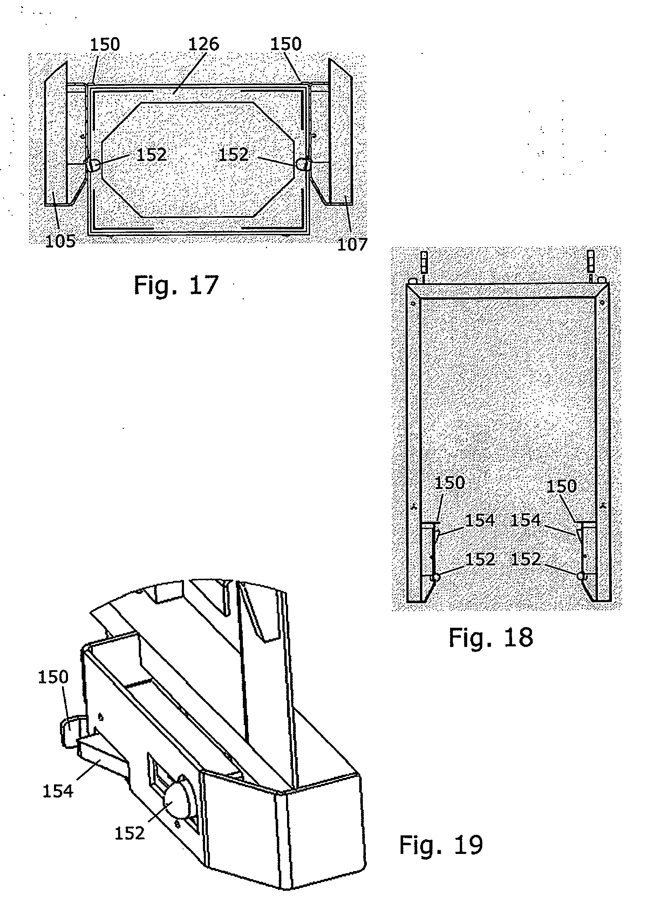

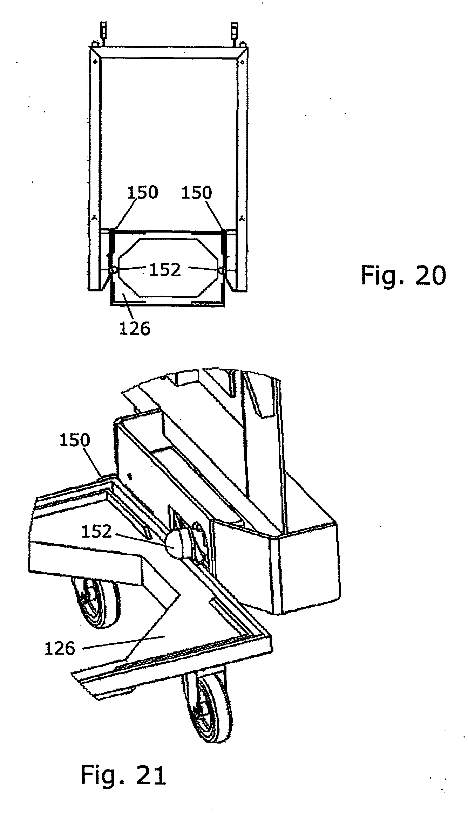

Figs. 17-21 illustrate an embodiment of an alignment device for aligning a stack of containers 122 with respect to the cart 100 of Figs. 1-9. It comprises a pair of end members 150, a pair of centre-alignment elements 152, and a pair of engagers 154. The engagers 154 form part of an element, which also integrates the centre-alignment elements 152, and which is pivotally mounted around a point located between the engagers 154 and the elements 152. When the support frame 126 for the stack of containers is placed between the left and right conveyor sections, cf. Figs. 20 and 21, the frame is advanced to a point, at which foremost edges of the frame 126 abut the end members 150. At the same time, the engagers 154 (not visible in Figs. 20 and 21) are pushed outwardly by the frame 126. Thereby, the centre-alignment elements are pushed inwardly to centrally align the containers 122 with respect to the frame 126, and thereby also with respect to the conveyor 104. For the sake of clarity, the containers 122 have been omitted from Figs. 17-21.

## Claims

1. A wheeled cart for supporting a plurality of product containers, comprising:
- a closed-loop conveyor for moving the containers along a closed-loop conveyor path in an upright plane; and
- container supporting elements for maintaining the containers in an essentially horizontal orientation at least over a portion of the closed-loop conveyor path;
**characterised by** a mechanism for stacking and/or de-stacking said plurality of containers, and for
(i) taking each one of the containers out of the conveyor substantially simultaneously with stacking of the container; and/or for
(ii) bringing each one of the containers into the conveyor substantially simultaneously with de-stacking of the container.

2. A cart according to claim 1, wherein the closed-loop conveyor is reversible, so as to allow conveying of said containers in two opposite directions.

3. A cart according to claim 2, wherein said mechanism for stacking and/or de-stacking of containers to or from a stack of containers is arranged to destack containers when the conveyor moves in a first conveying direction, and to stack containers when the conveyor moves in a second, reversed conveying direction.

4. A cart according to any of the preceding claims, wherein the conveyor comprises a pair of essentially parallel conveyor sections arranged with a mutual distance to allow left and right sides of the containers to be supported by respective conveyor sections.

5. A cart according to any of the preceding claims, wherein said mechanism is comprised in the closed-loop conveyor.

6. A cart according to claim 5, wherein said mechanism comprises a plurality of container-engaging devices, which are inwardly biased.

7. A cart according to claim 6, wherein the container-engaging devices are arranged so as to engage an uppermost container in a stack of containers and to thereby remove said uppermost container from the stack and bring it into the conveyor.

8. A cart according to claim 6 or 7, wherein the container-engaging devices are arranged to release a container, when the container's downward motion is blocked, while the conveyor is simultaneously advanced.

9. A cart according to any of the preceding claims, further comprising a stepladder for a human operator.

10. A cart according to any of the preceding claims, wherein the closed-loop conveyor has a lower and an upper portion, along which the containers can be conveyed in a substantially horizontal direction, and a left and right portion, along which the containers can be conveyed in a substantially vertical direction, and wherein one of the left and right portions comprises at least two laterally offset sections.

11. A cart according to any of the preceding claims, further comprising at least one aligning device for aligning a stack of containers with respect to the conveyor.

12. A method of picking products from a store and filling the products into a plurality of containers, comprising providing a wheeled cart according to any of claims 1-11, and at least one of the steps of:
(i) taking at least one of the containers out of the conveyor of said cart substantially simultaneously with stacking of the container; and/or
(ii) bringing at least one of the containers into the conveyor substantially simultaneously with de-stacking of the container;
the method further comprising the steps of picking said products from the store, and filling the products into said at least one container, while the container is in the conveying path of the conveyor.

13. A system for filling products into a plurality of containers, comprising a cart according to any of claims 1-11, and said plurality of containers.

14. A system according to claim 13, further comprising a wheeled stack-supporting device for supporting a stack of containers.
